# FASCICULE DE BREVET EUROPEEN

(11) **EP 1 503 914 B1**
(45) Date de publication et mention de la délivrance du brevet: **20.08.2008**
(21) Numéro de dépôt: 03749917.5
(22) Date de dépôt: 02.05.2003
(51) Int. Cl.: B60J 7/20

(54) **PLAGE ARRIERE DE VEHICULE**
HINTERES ABLAGEFACH FÜR FAHRZEUG
VEHICLE REAR PARCEL SHELF

(30) Priorité: 13.05.2002 FR 0205869
(43) Date de publication de la demande: 09.02.2005
(73) Titulaire: Société Européenne de Brevets Automobiles, 75011 Paris (FR)
(72) Inventeur: QUEVEAU, Gérard, F-79140 Le Pin (FR); QUEVEAU, Paul, F-79140 Montravers (FR); GUILLEZ, Jean-Marc, F-79140 Cirières (FR)
(74) Mandataire: Pichat, Thierry
(86) Numéro de dépôt international: PCT/FR2003/001381
(87) Numéro de publication internationale: WO 2003/095255

(56) Documents cités:
- DE-U- 29 602 762
- FR-A- 2 802 477

## Description

La présente invention concerne une plage arrière d'un véhicule, notamment d'un véhicule muni d'un toit repliable dans le coffre arrière du véhicule.

On connaît une plage arrière de véhicule, mobile entre une position d'utilisation où elle est disposée de façon sensiblement horizontale entre la cloison arrière de l'habitacle du véhicule et un bord avant du capot de coffre arrière, et une position escamotée où elle est disposée de manière à dégager l'espace entre la cloison arrière et le bord avant du capot et à permettre le passage d'un toit repliable, la plage comprenant une tablette centrale et deux tablettes latérales qui sont chacune mobiles par rapport à la tablette centrale. Une telle plage arrière est connue du document FR 2802477.

Le but de l'invention est de réaliser un dispositif apte à déplacer de façon simple et fiable chacune des tablettes latérales de sorte que le mouvement de la plage arrière soit facilité et, qu'en position escamotée, l'encombrement de la plage arrière soit réduit.

Selon l'invention, une plage arrière du type précité comprend des moyens adaptés à commander et à guider le coulissement de chacune des tablettes latérales par rapport à la tablette centrale, dans la direction transversale du véhicule, entre une position déployée et une position rentrée dans laquelle chaque tablette latérale est sensiblement rentrée sous la tablette centrale, dans les deux sens.

Ainsi, l'encombrement de la plage arrière dans la direction transversale du véhicule peut être réduit, permettant ainsi d'utiliser des emplacements de taille réduite pour recevoir la plage arrière en position escamotée.

D'autres particularités de la présente invention ressortiront de la description qui va suivre.

Aux dessins annexés, donnés à titre d'exemples non limitatifs,
- la figure 1 représente une vue schématique en coupe longitudinale de la partie arrière d'un véhicule;
- la figure 2 représente une demi-vue de dessus de la même partie du véhicule;
- la figure 3 représente une vue en perspective d'une partie latérale d'une plage arrière selon la présente invention, la tablette latérale représentée étant en position déployée;
- la figure 4 représente une vue en coupe de la plage arrière selon la ligne IV-IV à la figure 3; et
- la figure 5 représente une vue similaire à la figure 3, les moyens permettant le coulissement des tablettes latérales par rapport à la tablette centrale étant représentés au travers des tablettes.

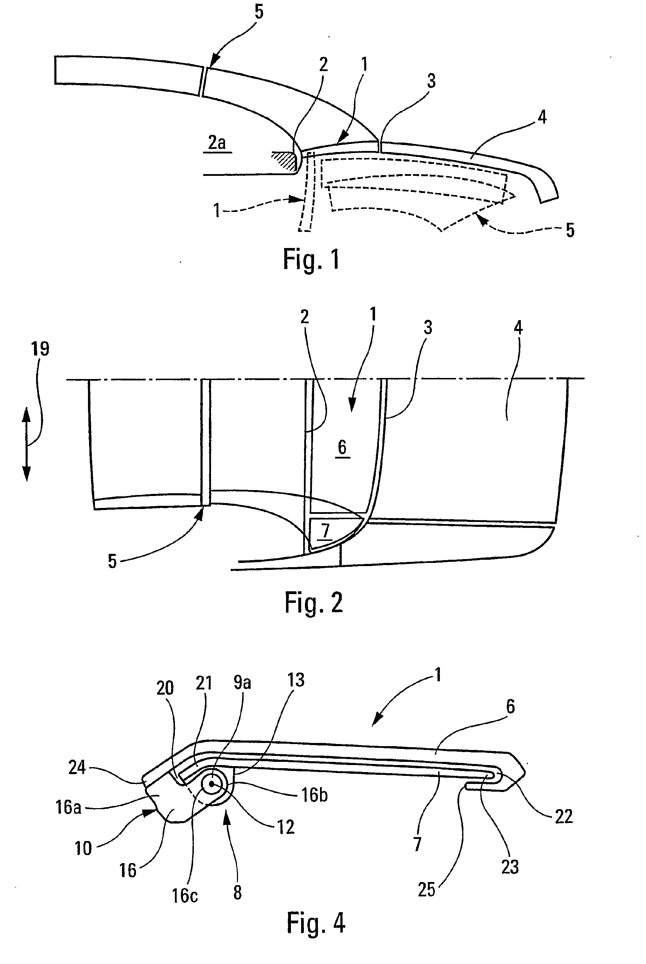

Une plage arrière 1 de véhicule est mobile entre une position d'utilisation et une position escamotée. Comme on peut le voir aux figures 1 et 2, en position d'utilisation, la plage arrière 1 est disposée de façon sensiblement horizontale entre une cloison arrière 2 de l'habitacle 2a du véhicule et un bord avant 3 du capot 4 du coffre arrière. En position escamotée, la plage arrière 1 est disposée de manière à dégager l'espace entre la cloison arrière 2 et le bord avant 3 du capot 4 et à permettre le passage du toit repliable 5 du véhicule. La cloison 2 est par exemple arrière des sièges situés le plus en arrière dans le véhicule.

A la figure 1, le toit repliable 5 est représenté, en traits pleins, en position déployée recouvrant l'habitacle, et, en tirets, en position repliée dans le coffre.

En position escamotée, la plage arrière 1 peut, par exemple, être disposée de façon sensiblement verticale suite à un pivotement autour d'au moins un axe de rotation orienté transversalement par rapport au véhicule, comme schématisé à la figure 1, la plage arrière 1 pouvant occuper d'autres positions dans sa position escamotée.

La plage arrière 1 comprend une tablette centrale 6 et deux tablettes latérales 7, chacune de ces tablettes latérales 7 étant disposée transversalement par rapport au véhicule dans le prolongement de la tablette centrale 6. Chacune de ces tablettes latérales 7 est mobile par rapport à la tablette centrale 6.

Seule la tablette latérale 7 gauche est représentée aux figures 2 à 5, la tablette droite non représentée étant symétrique de la tablette latérale 7 gauche.

Selon la présente invention, la plage arrière 1 comprend des moyens 8 adaptés à commander et à guider le coulissement de chacune des tablettes latérales 7 par rapport à la tablette centrale 6, sensiblement dans la direction transversale 19 du véhicule, entre une position déployée et une position rentrée dans laquelle chaque tablette latérale 7 est sensiblement rentrée sous la tablette centrale 6. Les moyens 8 permettent le coulissement de chaque tablette latérale 7 aussi bien de sa position déployée à sa position rentrée que de sa position rentrée à sa position déployée.

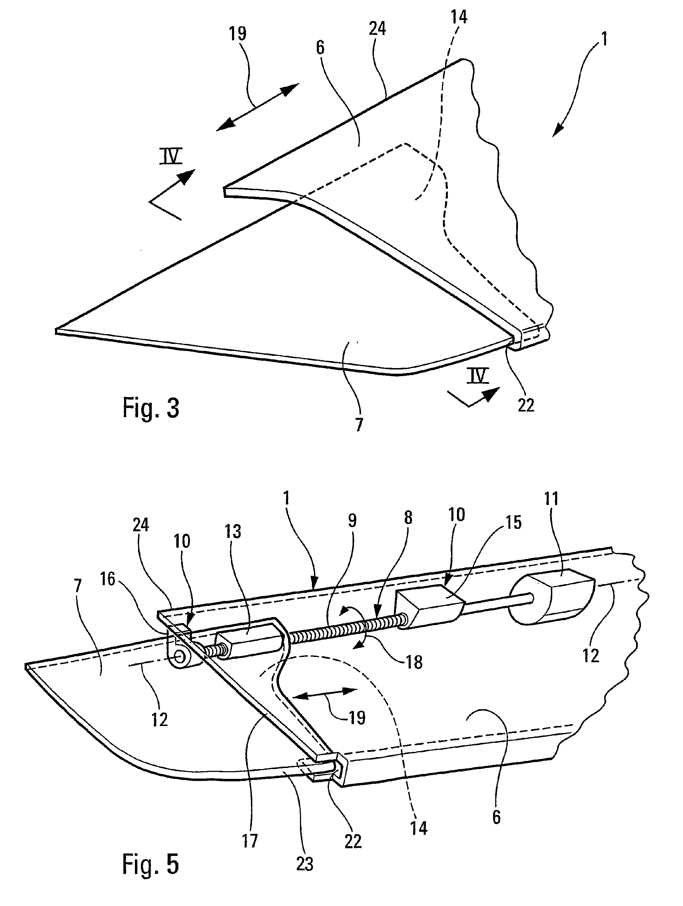

Dans l'exemple illustré aux figures 4 et 5, les moyens 8 adaptés à permettre le coulissement des tablettes latérales 7 comprennent au moins une tige filetée 9 qui s'étend de préférence dans la direction transversale 19 du véhicule et qui est disposée sous la tablette centrale 6.

Les moyens 8 adaptés à permettre le coulissement des tablettes latérales 7 comprennent également des moyens 10 adaptés à solidariser la tige filetée 9 à la tablette centrale 6 et des moyens 11 adaptés à faire tourner la tige filetée 9 autour de son axe 12, qui peuvent être, par exemple, un moteur 11.

Les moyens 8 adaptés à permettre le coulissement des tablettes latérales 7 comprennent aussi, pour chaque tablette latérale 7, au moins un écrou 13 qui est fixé à la tablette latérale 7 correspondante et qui est adapté à entraîner en translation la tablette latérale 7 correspondante pendant la rotation de la tige filetée 9.

Comme on peut particulièrement bien le voir aux figures 3 et 5, chaque tablette latérale 7 comprend une zone de manoeuvre 14 qui est disposée sous la tablette centrale 6 quand la tablette latérale 7 est en position déployée. Chaque écrou 13 est fixé à la tablette latérale 7 correspondante par cette zone de manoeuvre 14.

Ainsi, après mise en marche du moteur 11, la tige filetée 9 est entraînée en rotation autour de son axe 12, dans un sens ou dans un autre (comme représenté à la figure 5 par la flèche 18). Comme la tige filetée 9 est axialement fixée à la tablette centrale 6, son seul degré de liberté est cette rotation, et du fait de la coopération entre les filets de la tige filetée 9 et ceux des écrous 13, les deux tablettes latérales 7 sont entraînées en translation dans un sens ou dans l'autre, (comme représenté à la figure 5 par la flèche 19).

Ainsi, les moyens 8 adaptés à permettre le coulissement des tablettes latérales 7, permettent de réduire la dimension transversale de la plage arrière 1 quand les tablettes latérales 7 sont en position rentrée sous la tablette centrale 6.

La tige filetée 9 peut présenter des filets uniquement aux deux parties correspondant à l'amplitude de la translation de l'écrou 13 correspondant. Dans ce cas, les deux filets sont réalisés dans des sens opposés pour qu'une rotation de la vis 9 entraîne un coulissement des écrous 13 dans des sens opposés. Par ailleurs, les parties de la tige filetée 9 qui sont en contact avec les moyens 10 adaptés à solidariser la tige filetée 9 à la tablette centrale 6 ne possèdent pas de filets.

Dans l'exemple illustré aux figures 4 et 5, les moyens 10 adaptés à solidariser la tige filetée 9 à la tablette centrale 6 comprennent de préférence deux supports 15 situés à proximité du moteur 11, et deux paliers lisses 16 fixés chacun à proximité d'un bord latéral 17 de la tablette centrale 6.

Comme on peut particulièrement bien le voir à la figure 4, chaque palier lisse 16 est fixé en porte-à-faux à la tablette centrale 6 de façon à former une lumière 20 qui est adaptée au passage du bord transversal 21 correspondant de la tablette latérale 7 correspondante.

Afin de limiter le porte-à-faux de chaque palier lisse 16, la tige filetée 9 est, de préférence, disposée à proximité d'un bord transversal 21 des tablettes latérales 7, ici le bord avant.

Dans l'exemple des figures 4 et 5, chaque palier lisse 16 est fixé le long d'un bord transversal 24 de la tablette centrale 6 et a sensiblement une forme en L comprenant un pied 16a fixé audit bord 24 et un corps 16b s'étendant sous la tablette centrale 6 sensiblement parallèlement à celle-ci vers l'intérieur de celle-ci à partir du pied 16a pour former la lumière 20, le corps 16b comprenant un perçage 16c recevant l'extrémité 9a de la vis 9 et constituant le palier lisse proprement dit.

De plus, afin de guider chaque tablette latérale 7 pendant leur translation, la tablette centrale 6 comprend une rainure 22 réalisée dans la direction transversale du véhicule et formée par un rebord 25 retourné vers l'intérieur de la tablette centrale 6 sous celle-ci (voir figure 4). Cette rainure 22 est adaptée à recevoir en translation le bord transversal 23 de chacune des tablettes latérales 7 qui est opposé à celui passant dans la lumière 20, ici le bord arrière.

Dans l'exemple illustré aux figures 1 à 5, les éléments constitutifs de la plage arrière 1 conforme à la présente invention sont disposés symétriquement par rapport à l'axe longitudinal du véhicule, et par rapport au moteur 11.

Bien évidemment, la présente invention n'est pas limitée au mode de réalisation décrit en relation avec les figures, et de nombreuses modifications peuvent y être apportées.

Il serait ainsi possible de munir la tablette centrale de deux rainures réalisées chacune dans la direction transversale 19 du véhicule et adaptées à recevoir en translation un bord transversal de chacune des tablettes latérales 7, permettant de supprimer les paliers lisses 16.

On pourrait également prévoir deux vis 9 sensiblement coaxiales, une pour chaque tablette latérale 7, les deux vis tournant dans des sens opposés entraînées soit par deux moteurs respectifs, soit par un seul moteur entraînant un engrenage à deux sorties.

## Revendications

1. Plage arrière (1) de véhicule, mobile entre une position d'utilisation où elle est disposée de façon sensiblement horizontale entre une cloison arrière (2) de l'habitacle du véhicule et un bord avant (3) d'un capot (4) de coffre arrière, et une position escamotée où elle est disposée de manière à dégager l'espace entre la cloison arrière (2) et le bord avant (3) du capot (4) et à permettre le passage d'un toit repliable (5), la plage arrière (1) comprenant une tablette centrale (6) et deux tablettes latérales (7) qui sont chacune mobiles par rapport à la tablette centrale (6), **caractérisée en ce qu'**elle comprend des moyens (8) adaptés à commander et à guider le coulissement de chacune des tablettes latérales (7) par rapport à la tablette centrale (6), sensiblement dans la direction transversale (19) du véhicule, entre une position déployée et une position rentrée dans laquelle chaque tablette latérale (7) est sensiblement rentrée sous la tablette centrale (6), dans les deux sens.

2. Plage arrière (1) selon la revendication 1, **caractérisée en ce que** les moyens (8) adaptés à permettre le coulissement des tablettes latérales (7) comprennent au moins une tige filetée (9) s'étendant dans la direction transversale (19) du véhicule, sous la tablette centrale (6), des moyens (11) adaptés à faire tourner la tige filetée (9) autour de son axe (12), des moyens (10) adaptés à solidariser la tige filetée (9) à la tablette centrale (6) et, pour chaque tablette latérale (7), un écrou (13) fixé à la tablette latérale (7) correspondante, adapté à coopérer avec la tige filetée de façon à entraîner en translation la tablette latérale (7) correspondante pendant la rotation de la tige filetée (9).

3. Plage arrière (1) selon la revendication 2, **caractérisée en ce que** chaque tablette latérale (7) comprend une zone de manoeuvre (14) qui est disposée sous la tablette centrale (6) quand la tablette latérale (7) est en position déployée.

4. Plage arrière (1) selon la revendication 3, **caractérisée en ce que** chaque écrou (13) est fixé à la zone de manoeuvre (14) de la tablette latérale (7) correspondante.

5. Plage arrière (1) selon l'une des revendications 2 à 4, **caractérisée en ce qu'**un palier lisse (16) formant support (10) de l'extrémité correspondante (9a) de la tige filetée (9) est fixé à proximité de chacun des bords latéraux (17) de la tablette centrale (6).

6. Plage arrière (1) selon la revendication 5, **caractérisée en ce que** chaque palier lisse (16) est agencé et conformé de façon à former une lumière (20) adaptée au passage du bord transversal (21) correspondant de la tablette latérale (7).

7. Plage arrière (1) selon la revendication 6, **caractérisée en ce que** chaque palier lisse (16) est fixé le long d'un bord transversal (24) de la tablette centrale (6) et a sensiblement une forme en L comprenant un pied (16a) fixé audit bord (24) et un corps (16b) s'étendant sous la tablette centrale (6) sensiblement parallèlement à celle-ci vers l'intérieur de celle-ci à partir du pied (16a) pour former la lumière (20), le corps (16b) comprenant un perçage (16c) recevant l'extrémité (9a) de la vis (9) et constituant le palier lisse proprement dit.

8. Plage arrière (1) selon l'une quelconque des revendications précédentes, **caractérisée en ce que** la tablette centrale (6) comprend au moins une rainure (22) réalisée dans la direction (19) de coulissement adaptée à recevoir en translation un bord transversal (23) correspondant de chacune des tablettes latérales (7).

## Claims

1. A vehicle back shelf (1) that is movable between an in-use position in which it is disposed substantially horizontally between a rear partition (2) of the vehicle cabin and a front edge (3) of a rear trunk lid (4), and a retracted position in which it is disposed in such a manner as to leave space between the rear partition (2) and the front edge (3) of the lid (4) and allow a folding roof (5) to pass therethrough, the back shelf (1) comprising a central plate (6) and two side plates (7) each of which is movable relative to the central plate (6), the back shelf being **characterized in that** it includes means (8) suitable for controlling and guiding the sliding of each of the side plates (7) relative to the central plate (6) substantially in the transverse direction (19) of the vehicle in both directions between a deployed position and a retracted position in which each side plate (7) is substantially retracted under the central plate (6).

2. A back shelf (1) according to claim 1, **characterized in that** the means (8) adapted to enable the side plates (7) to slide comprise at least one threaded rod (9) extending in the transverse direction (19) of the vehicle under the central plate (6), means (11) adapted to rotate the threaded rod (9) about its axis (12), means (10) adapted to secure the threaded rod (9) to the central plate (6), and for each side plate (7), a nut (13) secured to the corresponding side plate (7) and adapted to co-operate with the thread rod in such a manner as to drive the corresponding side plate (7) in translation during rotation of the threaded rod (9).

3. A back shelf (1) according to claim 2, **characterized in that** each side plate (7) includes a drive zone (14) which is disposed underneath the central plate (6) when the side plate (7) is in the deployed position.

4. A back shelf (1) according to claim 3, **characterized in that** each nut (13) is fixed to the drive zone (14) of the corresponding side plate (7).

5. A back shelf (1) according to any one of claims 2 to 4, **characterized in that** a smooth bearing (16) forming a support (10) for the corresponding end (9a) of the threaded rod (9) is fixed in the vicinity of each of the side edges (17) of the central plate (6).

6. A back shelf (1) according to claim 5, **characterized in that** each smooth bearing (16) is arranged and shaped in such a manner as to form a slot (20) adapted to pass the corresponding transverse edge (21) of the side plate (7).

7. A back shelf (1) according to claim 6, **characterized in that** each smooth bearing (16) is fixed along a transverse edge (24) of the central plate (6) and is substantially L-shaped, comprising a foot (16a) fixed to said edge (24) and a body (16b) extending under the central plate (6) substantially parallel thereto towards the inside thereof from the foot (16a) so as to form the slot (20), the body (16b) including a hole (16c) receiving the end (9a) of the screw (9) and constituting the smooth bearing proper.

8. A back shelf (1) according to any preceding claim, **characterized in that** the central plate (6) includes at least one groove (22) extending in the sliding direction (19) and adapted to receive in translation a corresponding transverse edge (23) of each of the side plates (7).

## Patentansprüche

1. Heckbereich (1) eines Fahrzeugs, der zwischen einer Benutzungsposition, in welcher er im wesentlichen horizontal zwischen einer hinteren Trennwand (2) der Fahrgastzelle des Fahrzeugs und einem Vorderrand (3) einer hinteren Kofferraumklappe (4) angeordnet ist, und einer eingeschwenkten Position, in welcher dieser so angeordnet ist, dass dieser in einen Raum zwischen der hinteren Trennwand (2) und dem Vorderrand (3) der Klappe (4) eingreift und den Durchgang eines Faltdaches (5) ermöglicht, wobei der Heckbereich (1) eine zentrale Platte (6) und zwei seitliche Platten (7) umfasst, die jeweils in Bezug zur zentralen Platte (6) beweglich sind, **dadurch gekennzeichnet, dass** dieser eine Einrichtung (8) umfasst, die so ausgebildet ist, dass sie die Verschiebung jeder der seitlichen Platten (7) in Bezug zu der zentralen Platte (6) im wesentlichen in der Querrichtung (19) des Fahrzeugs zwischen einer ausgefahrenen Position und einer eingezogenen Position, in welcher jede seitliche Platte (7) im wesentlichen unter die zentrale Platte (6) eingezogen ist, in beiden Richtungen steuert und führt.

2. Heckbereich (1) nach Anspruch 1, **dadurch gekennzeichnet, dass** die Einrichtung (8) so ausgelegt ist, dass die um die Verschiebung der seitlichen Platten (7) zu ermöglichen ausgebildete Einrichtung (8) wenigstens eine Gewindestange (9), die sich in der Querrichtung (19) des Fahrzeugs unter die zentrale Platte (6) erstreckt eine Einrichtung (11) so ausgelegt, dass diese die Gewindestange (9) um ihre Achse (12) drehen lässt, eine Einrichtung (10) so ausgelegt, dass diese die Gewindestange (9) an der zentralen Platte (6) festlegt, und für jede seitliche Platte (7) eine Mutter (13), die an der entsprechenden seitlichen Platte (7) fixiert und so ausgelegt ist, dass sie mit der Gewindestange derart zusammenwirkt, dass die entsprechende seitliche Platte (7) während der Drehung der Gewindestange (9) translatorisch mitgenommen wird, umfasst.

3. Heckbereich (1) nach Anspruch 2, **dadurch gekennzeichnet, dass** jede seitliche Platte (7) eine Betätigungszone (14) umfasst, die unter der zentralen Platte (6) angeordnet ist, wenn sie die seitliche Platte (7) in der ausgefahrenen Position befindet.

4. Heckbereich (1) nach Anspruch 3, **dadurch gekennzeichnet, dass** jede Mutter (13) an der Betätigungszone (14) der entsprechenden seitlichen Platte (7) fixiert ist.

5. Heckbereich (1) nach einem der Ansprüche 2 bis 4, **dadurch gekennzeichnet, dass** ein Gleitlager (16), das eine Auflage (10) des korrespondierenden Endes (9a) der Gewindestange (9) bildet, am Ende jeder der seitlichen Ränder (17) der zentralen Platte (6) fixiert ist.

6. Heckbereich (1) nach Anspruch 5, **dadurch gekennzeichnet, dass** jedes Gleitlager (16) so angeordnet und ausgebildet ist, dass dieses eine Öffnung (20) bildet, die für den Durchgang des mit der seitlichen Platte (7) korrespondierenden Querrandes (21) ausgelegt ist.

7. Heckbereich (1) nach Anspruch 6, **dadurch gekennzeichnet, dass** jedes Gleitlager (16) entlang eines Querrandes (24) der zentralen Platte (6) fixiert ist und im wesentlichen eine L-Form hat, die einen am Rand (24) fixierten Fuß (16a) und einen Körper (16b) umfasst, der sich unter die zentrale Platte (6) im wesentlichen Parallel zu dieser in Richtung des inneren derselben ausgehend vom Fuß (16a) erstreckt, um die Öffnung (20) zu bilden, wobei der Körper (16b) eine Durchbrechung (16c) aufweist, die das Ende (9a) der Schraube (9) aufnimmt und das eigentliche Gleitlager bildet.

8. Heckbereich (1) nach einem der vorhergehenden Ansprüche, **dadurch gekennzeichnet, dass** die zentrale Platte (6) wenigstens eine Rinne (22) umfasst, die in der Richtung (19) der Verschiebung so ausgebildet ist, dass diese translatorisch einen Querrand (23) aufnehmen kann, der zu jeder der Seitenplatten (7) gehört.
